# EUROPEAN PATENT SPECIFICATION

(11) **EP 4 220 135 B1**
(45) Date of publication and mention of the grant of the patent: **23.07.2025**
(21) Application number: 21872169.4
(22) Date of filing: 09.09.2021
(51) Int. Cl.: G01N 21/47, G01N 21/84, G01N 21/17, G01J 3/50

(54) **OPTICAL CHARACTERISTICS MEASURING DEVICE, AND OPTICAL CHARACTERISTICS MEASURING METHOD**
VORRICHTUNG ZUR MESSUNG OPTISCHER EIGENSCHAFTEN UND VERFAHREN ZUR MESSUNG OPTISCHER EIGENSCHAFTEN
DISPOSITIF ET PROCÉDÉ DE MESURE DE CARACTÉRISTIQUES OPTIQUES

(30) Priority: 25.09.2020 JP 2020160338
(43) Date of publication of application: 02.08.2023
(73) Proprietor: KONICA MINOLTA, INC., Tokyo 100-7015 (JP)
(72) Inventor: UDA, Takushi, Tokyo 100-7015 (JP); TERAOKA, Yoshitaka, Tokyo 100-7015 (JP); KONNO, Kenji, Tokyo 100-7015 (JP)
(74) Representative: MFG Patentanwälte Meyer-Wildhagen Meggle-Freund Gerhard PartG mbB
(86) International application number: PCT/JP2021/033073
(87) International publication number: WO 2022/065038

(56) References cited:
- WO-A1-2011/101893
- WO-A1-2014/134099
- WO-A1-2020/054381
- WO-A1-2020/054381
- WO-A1-2020/145023
- JP-A- 2003 075 257
- JP-A- 2003 075 257
- JP-A- 2008 523 521
- JP-A- H0 755 705
- JP-A- H0 755 705
- JP-A- H11 211 673
- US-A1- 2007 273 885
- US-A1- 2008 069 482
- US-A1- 2019 320 094
- SHRESTHA RAJU ET AL: "Assessment of Two Fast Multispectral Systems for Imaging of a Cultural Heritage Artifact - A Russian Icon", 2018 14TH INTERNATIONAL CONFERENCE ON SIGNAL-IMAGE TECHNOLOGY & INTERNET-BASED SYSTEMS (SITIS), IEEE, 26 November 2018 (2018-11-26), pages 645 - 650, XP033545663, DOI: 10.1109/SITIS.2018.00104

## Description

### Technical Field

The present invention relates to an optical characteristics measuring device and an optical characteristics measuring method used for measuring optical characteristics of a painted part or the like as a measured site including, for example, a flaky aluminum piece or mica piece called a luster material.

### Background Art

A paint containing a luster material as described above appears to have a different color depending on the observation angle, and thus the paint is widely used as a metallic paint, a pearl paint, or the like for various industrial products such as automobiles requiring designability.

Conventionally, various measuring devices have been proposed in order to regard evaluation of characteristics of such metallic paint or pearl paint as texture other than color.

For example, Patent Literature 1 proposes a measurement device in which a line light source is swept in a direction perpendicular to the line light source, a sample surface is imaged by a camera, and sample optical characteristics in the vicinity of specular reflection are evaluated.

In addition, Patent Literature 2 proposes, as a device that more easily performs goniometric measurement of reflected light characteristics at a plurality of angles, a device that synchronizes a timing at which an image of a measurement object is captured by an imaging unit with at least one of a timing at which an illumination angle of an illumination unit varies or a timing at which a light receiving angle of the imaging unit varies, and measures a reflectance distribution of the measurement object from an image captured in synchronization with at least one of a variation in the illumination angle or a variation in the light receiving angle.
Patent Literature 3 discloses a device for detecting flaws on a surface of a flexible object comprising an illuminating means, an image capturing means and an analyzing means that analyzes the images excluding an area with regular reflected light. Patent Literature 4 discloses a system that obtains a plurality of sets of images each being acquired using different lighting conditions and combines them into a single image while removing specular highlights. Patent Literature 5 discloses a device having a cavity with black inner walls and a sample opening, the device further comprising illumination means for illumination of the cavity and a digital imaging device directed from the cavity to a sample opening. Patent Literature 6 discloses a method for evaluating depth feel of painting. Patent Literature 7 discloses an apparatus and a method for evaluation of surface properties. Patent Literature 8 discloses an image processor comprising specular reflection region detecting portion that detects the position of a specular reflection region based on the data of each pixel that constitutes the image and a rectangular region setting portion that sets an analysis region to become the object of analysis processing in the image based on the position of the specular reflection region. Patent Literature 9 discloses an output device for surface features measurement data and surface features measurement device. Patent Literature 10 discloses a reflection characteristic-measuring apparatus. Non-Patent Literature 1 discloses multispectral systems which are used to image paintings while ignoring areas prone to specular reflections.

### Citation List

### Patent Literature

Patent Literature 1: JP 2018-9987 A
Patent Literature 2: JP 2014-240830
Patent Literature 3: WO 2011/101893 A1
Patent Literature 4: US 2019/320094 A1
Patent Literature 5: US 2007/273885 A1
Patent Literature 6: JP H07 55705 A
Patent Literature 7: JP H11 211673 A
Patent Literature 8: US 2008/069482 A1
Patent Literature 9: WO 2020/054381 A1
Patent Literature 10: JP 2003 075257 A

### Non-Patent Literature

Non-Patent Literature 1: Shrestha, Raju, and Jon Yngve Hardeberg. "Assessment of two fast multispectral systems for imaging of a cultural heritage artifact-a Russian icon." 2018 14th International Conference on Signal-Image Technology & Internet-Based Systems (SITIS). IEEE, 2018.

### Summary of Invention

### Technical Problem

However, the technique described in Patent Literature 1 is affected by a specular reflection component from a sample surface, and thus has a problem that it is difficult to accurately evaluate optical characteristics when a luster material or the like is included in the surface of the sample. Also in the technique described in Patent Literature 2, elimination of the influence of the specular reflection component from the surface of the measurement object is not considered.

The present invention has been made in view of such a technical background, and an object thereof is to provide an optical characteristics measuring device and an optical characteristics measuring method capable of accurately measuring optical characteristics of a measurement object having a reflecting element such as a luster material included in a painted part on a surface thereof while eliminating an influence of a specular reflection component on a surface of the measurement object of illumination light.

### Solution to Problem

According to a first aspect the present disclosure provides an optical characteristic measuring device in accordance with independent claim 1. According to a second aspect the present disclosure provides an optical characteristics measuring method in accordance with independent claim 10. Further aspects are set forth in the dependent claims, the drawings, and the following description.

The above object is achieved by the following means.
(1) An optical characteristics measuring device including an illumination device capable of illuminating a measured site of a measurement object with illumination light of which an illumination angle is changed to a plurality of illumination angles, an imaging element that receives reflected light from the measured site of each beam of the illumination light having the illumination angle changed, and an analysis unit that sets, as an analysis area, a specific area at a position where a specular reflection component on a surface of the measured site is not received with respect to any beam of the illumination light having the illumination angle changed in a light receiving area in the imaging element, and analyzes an optical characteristic of the measured site on the basis of a light reception result in the analysis area when the measured site is irradiated with each beam of the illumination light, wherein the illumination device is a single illumination display device capable of changing an illumination angle into a plurality of illumination angles by moving a display position of a specific illumination pattern, and a moving direction of the illumination pattern is a direction parallel and/or perpendicular to a plane formed by a normal of the measured site, a normal of the illumination display device, and a normal of the imaging element, wherein the imaging element is a two-dimensional imaging element in which an entire light receiving area is larger than a light receiving area of a specular reflection component on a surface of the measured site by one beam of illumination light, and wherein when a moving direction when a light receiving position on a side of the imaging element for a specular reflection component on a surface of the measured site sequentially moves in response to a change in the illumination angle of the illumination light is a first direction, the analysis area is set at a position shifted in a direction perpendicular to the first direction.
(2) The specific illumination pattern may be a single or a plurality of bright points or bright lines.
(3) In the optical characteristics measuring device, there may be two analysis areas, and a light receiving position for the specular reflection component moving in the first direction passes through a midpoint of the two analysis areas.
(4) The optical characteristics measuring device may further include an exposure time determining unit that determines an exposure time of the illumination light with respect to the imaging element before starting measurement.
(5) The exposure time determining unit may determine the exposure time on the basis of luminance information obtained in the analysis area.
(6) The exposure time determining unit may determine the exposure time on the basis of luminance information obtained in the analysis area and an exposure time at that time.
(7) The spatial resolution of the imaging element may be 10 to 100 µm.
(8) The optical characteristic of the measured site may be an optical characteristic derived from a luster material contained in the measurement object.
(9) The optical characteristic derived from the luster material may include at least one of information on a light distribution characteristic, luminance, a particle diameter, or dispersion aggregation of the luster material.
(10) The light distribution characteristic may be measured in each of two orthogonal directions.
(11) In the optical characteristics measuring device, the illumination device, the imaging element, and the analysis unit may be provided in one housing, which includes an opening for irradiating a measured site of the measurement object with illumination light and taking in reflected light from the measured site, and a result display unit for displaying a measurement result.
(12) An optical characteristics measuring method including a step of illuminating, by an illumination device, a measured site of a measurement object with illumination light of which an illumination angle is changed to a plurality of illumination angles, a step of receiving, by an imaging element, reflected light from the measured site of each beam of the illumination light having the illumination angle changed, and a step of setting, as an analysis area, a specific area at a position where a specular reflection component on a surface of the measured site is not received with respect to any beam of the illumination light having the illumination angle changed in a light receiving area in the imaging element, and analyzing an optical characteristic of the measured site on the basis of a light reception result in the analysis area when the measured site is irradiated with each beam of the illumination light, wherein the illumination device is a single illumination display device capable of changing an illumination angle into a plurality of illumination angles by moving a display position of a specific illumination pattern, and a moving direction of the illumination pattern is a direction parallel and/or perpendicular to a plane formed by a normal of the measured site, a normal of the illumination display device, and a normal of the imaging element, wherein the imaging element is a two-dimensional imaging element in which an entire light receiving area is larger than a light receiving area of a specular reflection component on a surface of the measured site by one beam of illumination light, and wherein when a moving direction when a light receiving position on a side of the imaging element for a specular reflection component on a surface of the measured site sequentially moves in response to a change in the illumination angle of the illumination light is a first direction, the analysis area is set at a position shifted in a direction perpendicular to the first direction.
(13) In the above method, the spatial resolution of the imaging element may be 10 to 100 µm.
(14) The optical characteristic of the measured site may include at least one of information on a light distribution characteristic, luminance, a particle diameter, or dispersion aggregation of the luster material included in the measurement object.

### Advantageous Effects of Invention

According to the invention, reflected light from a measured site when the measured site of a measurement object is illuminated with illumination light of which an illumination angle is changed to a plurality of illumination angles is received by an imaging element. A specific area at a position where a specular reflection component on a surface of the measured site is not received with respect to any beam of the illumination light having an illumination angle changed in a light receiving area in the imaging element is set as an analysis area, and an optical characteristic of the measured site is analyzed on the basis of a light reception result in the analysis area when the measured site is irradiated with each beam of the illumination light.

That is, in the analysis area of the imaging element, reception of the specular reflection component on the surface of the measured site is avoided, and for each beam of the illumination light having the illumination angle changed, only light directed toward the analysis area, in other words, only specular reflection light derived from a reflecting element among light reflected by the reflecting element such as a luster material of the measured site irradiated with the illumination light is received in the analysis area. Therefore, from the light reception result of the analysis area for each beam of the illumination light having the illumination angle changed, the optical characteristic of the measurement object can be accurately measured while influence of the specular reflection component on the surface of the measurement object is eliminated.

According to the invention, the illumination device is a single illumination display device capable of changing an illumination angle into a plurality of illumination angles by moving a display position of a specific illumination pattern, and a moving direction of the illumination pattern is a direction parallel or perpendicular to a plane formed by a normal of the measured site, a normal of the illumination display device, and a normal of the imaging element, so that the optical characteristic of the measurement object can be measured with a simple configuration.

According to the invention, the analysis area can be easily set by using a two-dimensional imaging element in which an entire light receiving area is larger than a light receiving area of specular reflection light by one beam of illumination light as the imaging element.

According to the invention, when a moving direction when a light receiving position on a side of the imaging element for a specular reflection component on a surface of the measured site sequentially moves in response to a change in the illumination angle of the illumination light is a first direction, the analysis area is set at a position shifted in a direction perpendicular to the first direction, so that the specular reflection component on the surface of the measured site of each beam of the illumination light can be reliably avoided from being received in the analysis area.

According to the item (2) above, by moving a single bright point or bright line on the single illumination display device, the illumination light of which the illumination angle is changed to a plurality of illuminations angles can be easily achieved.

According to the item (3) above, a more detailed measurement result can be obtained on the basis of light reception results in the two analysis areas.

According to the item (4) above, since the exposure time of the illumination light with respect to the imaging element is determined before starting measurement, it is possible to measure the optical characteristic with higher accuracy by an appropriate exposure time.

According to the items (5) and (6) above, a more appropriate exposure time can be determined.

According to the items (7) and (13) above, since the spatial resolution of the imaging element is 10 to 100 µm, it is possible to measure realistic reflection angle characteristics suitable for human eyes.

According to the the item (8) above, an optical characteristic derived from a luster material contained in the measurement object can be measured.

According to the items (9) and (14) above, it is possible to measure optical characteristic including at least one of information on a light distribution characteristic, luminance, a particle diameter, or dispersion aggregation of the luster material.

According to the item (10) above, the light distribution characteristic is measured in two orthogonal directions.

According to the item (11) above, an optical characteristic of a measurement object can be measured regardless of the place by carrying the housing.

### Brief Description of Drawings

Fig. 1 is a block diagram illustrating a configuration of an optical characteristics measuring device including an output device of optical characteristics measuring data according to one example of the present disclosure.
Fig. 2 is an external perspective view of the optical characteristics measuring device.
Fig. 3 is a diagram for explaining a surface configuration of a measurement object having a paint containing a luster material.
Fig. 4 is a diagram illustrating a movement state of an illumination pattern and an image of an imaging element at that time.
Fig. 5 is a diagram for explaining a specific example of a changeable illumination angle range of the illumination device.
Figs. 6A to 6D are diagrams schematically illustrating a state of reflection from a luster material when an illumination pattern is moved (scanned) in one direction.
Figs. 7A to 7C are graphs illustrating an example of a luminance value obtained in each of a pixel at a position where a specular reflection component on a surface of a measured site is received and a pixel in an analysis area when an illumination angle is changed.
Fig. 8 is an explanatory diagram of light distribution information of a luster material.
Fig. 9A is a diagram schematically illustrating a state in which a large number of luster materials having a small particle diameter exist, and Fig. 9B is a diagram schematically illustrating a state in which luster materials having a large particle diameter exists.
Fig. 10A is a diagram schematically illustrating a state in which luster materials are dispersed, and Fig. 10B is a diagram schematically illustrating a state in which luster materials are aggregated.
Figs. 11A and 11B are diagrams for explaining a method of determining an exposure time.
Fig. 12 is an explanatory diagram in a case where two analysis areas are set for one illumination pattern.
Fig. 13 is an explanatory diagram in a case where an analysis area is set for two illumination patterns.
Fig. 14 is an explanatory diagram in a case where an analysis area is set for two illumination patterns moving in two orthogonal directions.

### Description of Examples

The present invention is defined by the appended claims. Hereinafter, the present invention will be described with reference to the drawings.

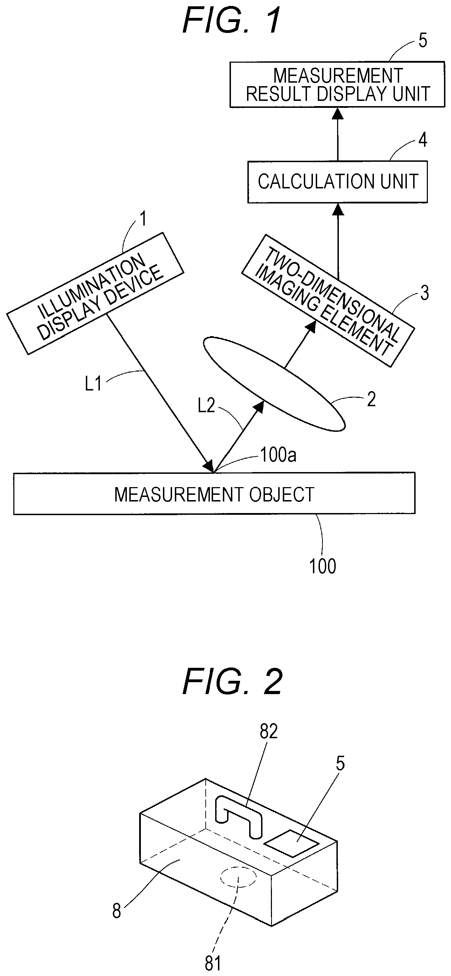

Fig. 1 is a block diagram illustrating a configuration of an optical characteristics measuring device according to an example of the present disclosure.

The optical characteristics measuring device illustrated in Fig. 1 includes a single illumination display device 1, an objective lens 2, a two-dimensional imaging element 3 including a CCD sensor or the like, a calculation unit 4, and a measurement result display unit 5 including a liquid crystal display device or the like.

The illumination display device 1 displays at least one illumination pattern, and irradiates a measured site 100a of the measurement object (also simply referred to as a sample) 100 with illumination light L1 from the displayed illumination pattern.

The imaging element 3 includes a large number of pixels, receives reflected light L2 from the sample 100 on each pixel via the objective lens 2, converts the reflected light L2 into image data, and outputs the image data.

The illumination display device 1 and the imaging element 3 are arranged in a positional relationship in which the imaging element 3 can receive reflected light of a specular reflection component that is specular reflection on the surface of the measured site 100a. That is, the illumination display device 1 and the imaging element 3 are arranged in a relationship such that the angle formed by a normal of the measured site 100a of the sample 100 and a normal of the illumination display device 1 and the angle formed by the normal of the measured site 100a of the sample 100 and the imaging element 3 are equivalent.

The image data that is an electrical signal output from the imaging element 3 is converted as necessary into a digital signal through an IV conversion circuit and an AD conversion circuit that are not illustrated, and is sent to the calculation unit (corresponding to the analysis unit) 4. The calculation unit 4 uses the sent image data to perform calculation processing of optical characteristics of the measured site 100a, for example, optical characteristics derived from a luster material by the CPU or the like, and the measurement result display unit 5 displays the calculation result, that is, the measurement result by the calculation unit 4. Note that conversion of the image data output from the imaging element 3 into the digital signal may be performed by the calculation unit 4.

The calculation unit 4 may be a dedicated device or may be constituted by a personal computer. Further, the image data output from the imaging element 3 and processed into the digital signal may be sent to the calculation unit 4 via a network. In this case, even if the calculation unit 4 is present at a place away from the measurement place, the optical characteristics can be measured.

Next, spatial resolution of the imaging element 3 will be described. In order to detect a phenomenon visually observed by the imaging element 3, the imaging element 3 needs spatial resolution corresponding to human eyes. According to one study, the minimum width that can be distinguished by the human eye is said to be about 0.6 minutes. Assuming that the distance from the pupil to the observation object is 20 to 30 cm, the distance between the two distinguishable points is calculated to be 30 to 50 µm.

Further, when the measurement object is a painted surface containing a luster material of an automobile exterior material, the particle size of the luster material contained in the paint film is about 10 to 20 µm for a small one and about 100 µm for a large one. It is more desirable that the imaging element 3 can spatially distinguish each of the luster materials.

From the above, the spatial resolution of the imaging element 3 is desirably about 10 to 100 µm.

Fig. 2 is a perspective view illustrating an appearance of the optical characteristics measuring device according to an example of the present disclosure. Here, the optical characteristics measuring device is configured to be a portable handy type.

Specifically, the illumination display device 1, the objective lens 2, the imaging element 3, and the calculation unit 4 are accommodated in a housing 8. Further, on an upper surface of the housing 8, a portable grip portion 82 is provided, and the measurement result display unit 5 for displaying a measurement result is provided, and moreover, on a lower surface of the housing 8, an opening 81 for irradiating the measured site 100a of the sample 100 with illumination light and taking in reflected light from the measured site is formed.

When the optical characteristics measuring device illustrated in Fig. 2 is used, the grip portion 82 is gripped, and the opening 81 on the lower surface is positioned at the measured site 100a of the sample 100. In this state, the sample 100 is irradiated with illumination light from the illumination display device 1 accommodated in the housing 8, the reflected light is received by the imaging element 3, optical characteristics are measured by calculation by the calculation unit 4 using the image data output from the imaging element 3, and the measurement result is displayed on the measurement result display unit 5.

With such an optical characteristics measuring device, the optical characteristics can be measured regardless of the place by carrying the housing.

### (First Example)

Next, measurement of specific optical characteristics will be described.

The optical characteristics are characteristics that the measured site 100a reflects the illumination light L1 at what reflection angle, and are evaluated in a specific analysis area of the entire light receiving area of the imaging element 3 as described later. Here, a case where the optical characteristic is information (for example, a light distribution angle) related to the light distribution of the luster material will be described.

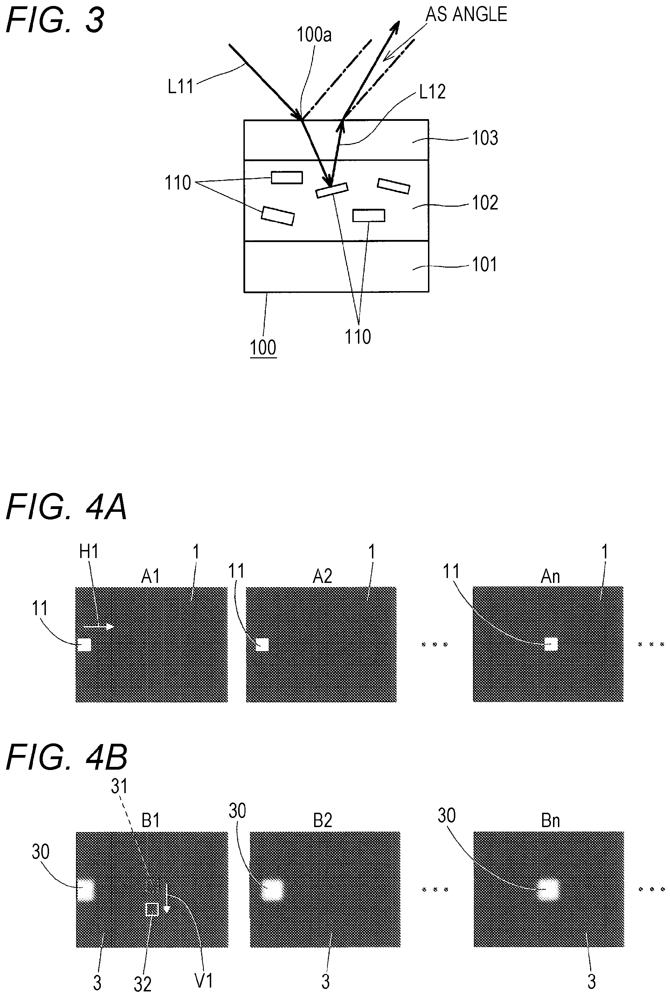

As illustrated in Fig. 3, in a typical layer structure of an automobile surface on which a paint including a luster material is applied, a luster material containing layer 102 containing a luster material 110 is applied and laminated on a base layer 101 as a base material, and a clear layer 103 formed of a clear coat layer or the like is further laminated thereon. An optical model for measuring optical characteristics of such a layer structure will be considered.

The luster material 110 in a paint film exists with a certain inclination (orientation). The orientation distribution generally has a peak in the horizontal direction (zero degrees) of the paint film surface, and has a distribution in which the number of luster materials decreases with an increase in angle.

It is said that the state of the orientation depends on painting conditions such as blowing speed, pressure, and film thickness of the paint as well as design factors such as the luster material 110 and the type of the paint.

When the illumination light L1 is incident on the measured site 100a of the sample 100 having such a luster material containing layer 102, a part thereof is specularly reflected (specular reflection) at the surface of the clear layer 103, and a part thereof is transmitted through the surface of the clear layer 103. A part of the transmitted light is specularly reflected (specular reflection light L12) by the luster material 110 inside the paint.

The luster material reflection reflects light in a direction corresponding to the inclination of the luster material 110 from the horizontal direction of the paint film surface. Usually, orientation angles θ of many of the luster materials 110 fall within 5° with respect to the sample normal direction. When the refractive index of the clear layer is n = 1.4 and the incident angle is 45°, this corresponds to |θas| ≤ 15° when expressed by an as angle in Fig. 2.

A case where the optical characteristics of the measured site 100a of the sample 100 including the luster material containing layer 102 and the clear layer 103 are measured by the optical characteristics measuring device according to the present example will be described.

It is assumed that the resolution on the sample surface is selected to be sufficiently high, and there is spatial resolution enough to capture bright spots derived from each luster material in the automobile exterior paint. As described above, the spatial resolution of the imaging element 3 is desirably about 10 to 100 µm.

The illumination display device 1 displays a predetermined illumination pattern and moves the displayed illumination pattern in one direction. As an example of the illumination pattern, a single bright point can be mentioned. A state in which the single bright point is displayed and moved on the illumination display device 1 is illustrated in Fig. 4A, and a captured image acquired by the imaging element 3 when the bright point is moved is illustrated in Fig. 4B. In this example, the moving direction of the bright point 11 is a direction parallel to a plane constituted by the normal of the measured site 100a, the normal of the illumination display device 1, and the normal of the imaging element 3 (horizontal direction in Fig. 4A).

In Fig. 4A, a rectangular white portion is a bright point 11, and a black portion is a non-light emitting region. The illumination display device 1 has a rectangular display surface, and in the screen number A1, a bright point 11 is displayed at an intermediate portion in a vertical direction of one end portion (left end portion in Fig. 4A) in a horizontal direction of the display surface. As indicated by arrow H1 on screen A1, bright point 11 sequentially moves (scans) to the other end side (right end side in Fig. 4A) in the horizontal direction of the display surface. The screen numbers A1 → A2 →... → An →... indicate the display surfaces on which the bright point 11 is moving.

On the other hand, as illustrated in Fig. 4B, the two-dimensional imaging element 3 has a rectangular light receiving area as a whole including a large number of pixels. The image number B1 indicates a captured image of the imaging element 3 when illuminated on the display screen of the screen number A1, and a white point indicates that the luminance is high in the light receiving portion 30 at the intermediate portion in the vertical direction at one end portion in the horizontal direction (left end portion in Fig. 4A) in the entire rectangular light receiving area. The reason why the luminance of the light receiving portion 30 is high is that the specular reflection component specularly reflected by the surface of the clear layer 103 when the illumination light from the bright point 11 indicated by the screen number A1 is applied to the measured site 100a is received. That is, the light receiving portion 30 is the arrival point of the specular reflection component specularly reflected by the surface of the clear layer 103 to the image element 3.

When the bright point 11 of the illumination display device 1 moves (scans) as indicated by the screen number A2 →... → An →..., the illumination angle with respect to the measured site 100a sequentially changes, but the angle of the imaging element 3 on the light receiving side is fixed. From the position of the bright point 11 and the geometry of the imaging element 3, the incident light direction and the emitted light direction at each measured site 100a can be uniquely specified.

Therefore, the position of the light receiving portion 30 that receives the specular reflection component on the surface of the clear layer 103 when the measured site 100a is irradiated with the illumination light from the moved bright point 11 also sequentially moves as indicated by the image numbers B2 →... → Bn →... to the other end side (right end side of Fig. 4B) in the horizontal direction.

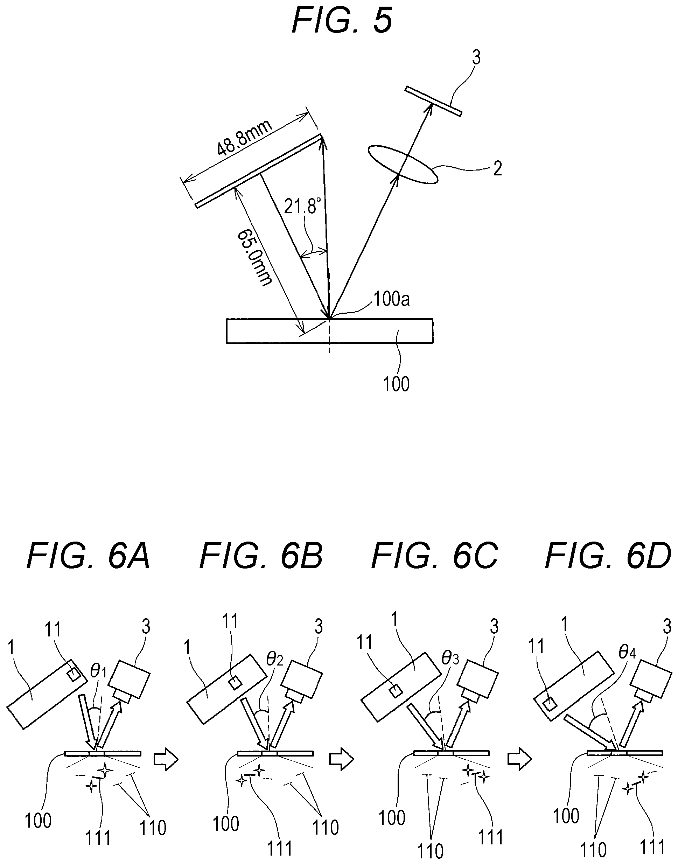

Here, a specific example of the changeable illumination angle range of the illumination display device 1 will be supplemented. For example, as illustrated in Fig. 5, when the distance between the illumination display device 1 and the measured site 100a of the measurement object 100 is 65.0 mm, the illumination display device 1 is 2.4 inches QVGA, and the length of the long side is 48.8 mm, the illumination angle of the bright point 11 can be achieved up to 21.8° at the as angle. As described above, the illumination angle width is sufficient for evaluating the luster material 110.

For the luster material 110 included in the luster material containing layer 102, in a case where the illumination angle and the light receiving angle are equal to each other with respect to the plane normal of the luster material 110, the imaging element 3 receives specular reflection light of the luster material 110, and the obtained luminance is maximized. On the other hand, since the reflection luminance decreases as deviating from the relationship of specular reflection, when the bright point 11 is moved, a distribution having a luminance peak in a certain specific pattern (= specific illumination angle) is obtained.

This state is illustrated in Figs. 6A to 6D. These drawings schematically illustrate a state of reflection from the luster material 110 when the bright point 11 of the illumination display device 1 is moved in a width direction of the display surface. Further, each of the drawings on the lower side illustrates the luster material of interest 111 interposed between + marks and + marks.

In Fig. 6A, the bright point 11 does not move, the illumination angle with respect to the measured site 100a is θ1, and in this state, the luminance of the luster material 110 inclined downward to the right becomes maximum as illustrated at the luster material of interest 111. In Fig. 6B, the bright point 11 moves and the illumination angle with respect to the measured site 100a is θ2, and in this state, the luminance of the luster material 110 arranged substantially horizontally becomes maximum as illustrated at the luster material of interest 111. In Fig. 6C, the bright point 11 further moves and the illumination angle with respect to the measured site 100a is 03, and in this state, the luminance of the luster material 110 inclined downward to the left becomes maximum as illustrated at the luster material of interest 111. In Fig. 6D, the bright point 11 further moves and the illumination angle with respect to the measured site 100a is θ4, and in this state, the luminance of the luster material 110 further inclined downward to the left becomes maximum as illustrated at the luster material of interest 111.

As described above, the angle at which the luminance is maximized differs for each pixel, and depends on the reflection angle of the luster material 110 and thus the orientation angle. In other words, it is possible to estimate the orientation angle of each of the luster materials from the peak position of the luminance.

However, as described above, in a case where the specular reflection component on the surface of the clear layer 103 is included, the peak of the luminance value appears at a position different from the position derived from the luster material, and thus it becomes difficult to estimate the optical characteristics derived from the luster material.

Therefore, in this example, a specific area that does not receive the specular reflection component on the surface of the clear layer 103 in the light receiving area of the imaging element 3 is set as an analysis area, and the optical characteristics of the luster material 110 are analyzed on the basis of a light reception result in the analysis area.

Describing this analysis area, as in the image number B1 of Fig. 4B, a rectangular area 31 indicated by a dashed line and a rectangular area 32 indicated by a solid line are provisionally set in the entire light receiving area of the imaging element 3. As described above, the position of the light receiving portion 30 that receives the specular reflection component on the surface of the clear layer 103, in other words, the position where the specular reflection component on the surface of the clear layer 103 reaches the imaging element 3 side also moves in the horizontal direction corresponding to the movement of the bright point 11 of the illumination display device 1 in the horizontal direction, but the dashed-line rectangular area 31 is located on a line in the moving direction (corresponding to the first direction) of the light receiving portion 30, and the specular reflection component on the surface of the clear layer 103 is received depending on the position of the bright point 11. On the other hand, the solid-line rectangular area 32 is at a position shifted in a perpendicular direction from the moving direction of the light receiving portion 30 accompanying the movement of the bright point 11, and does not receive any specular reflection component on the surface of the clear layer 103 by each bright point 11 even if the bright point 11 moves.

Accordingly, the solid-line rectangular area 32 that receives only specular reflection light derived from the luster material and does not receive a specular reflection component on the surface of the clear layer 103 is set as an analysis area, and a light reception result of pixels in the analysis area 32 is analyzed to obtain optical characteristics of the luster material 110.

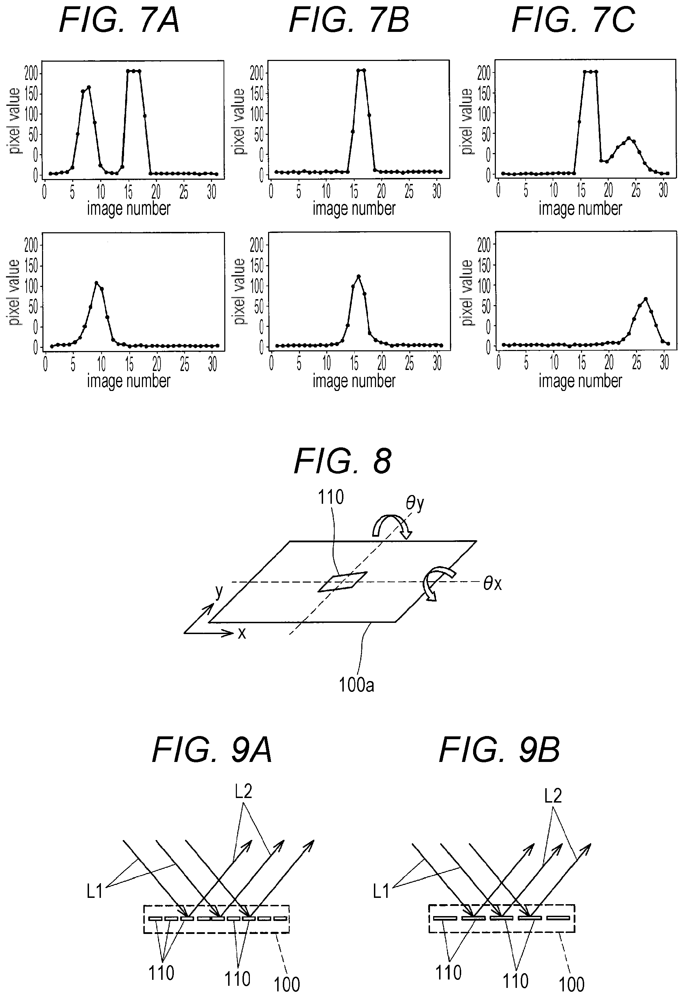

A specific example will be described. As illustrated in Fig. 4A, when the bright point 11 is moved 31 times from the left to the right to change the illumination angle 31 times and 31 images captured at each position of the bright point 11 are set as images (image-number) 1 to 31, examples of luminance values obtained for each of the 31 images for one pixel each in the solid-line rectangular area (analysis area) 32 and the dashed-line rectangular area 31 are illustrated in Figs. 7A, 7B, and 7C. An upper graph in the drawings is a pixel value for a pixel in the dashed-line rectangular area 31, a lower graph is a pixel value for a pixel (pixel of interest) in the solid-line rectangular area 32, the horizontal axis of each graph is an image number, and the vertical axis is a luminance value. The luminance value is held in eight bits, the maximum value is 255, and the minimum value is 0.

Further, Figs. 7A, 7B, and 7C illustrate cases where peaks of specular reflection light of the luster material 110 exist in the first half image, the image near the center, and the second half image, respectively.

In the upper graph, a peak always exists near the image number 15 in any of 7A to 7C. This is a peak of the specular reflection component on the surface of the clear layer 103. Because of the presence of this peak, it is difficult to directly associate the peak position with the orientation of the luster material 110. In particular, a luminance component derived from the luster material having a peak near the image number 15 is buried in the specular reflection component on the surface of the clear layer 103 as in the upper graph of Fig. 7B, and thus it is difficult to detect the peak of the luminance component derived from the luster material. Further, the luster material reflection exhibiting a peak at this position is caused by the luster material 110 having a small inclination, and there are usually many such reflections from the orientation distribution of the luster material 110.

On the other hand, in the lower graph, such a peak structure is not observed, and only the peak derived from the luster material reflection is observed regardless of the peak position in any position of 7A, 7B, and 7C. Therefore, the orientation information of the luster material 110 can be calculated from the peak position. That is, highly accurate light distribution information can be calculated on the basis of luminance value of the pixels in the solid-line rectangular area (analysis area) 32.

The calculated orientation information will be described.

As illustrated in Fig. 8, it is assumed that the horizontal direction of the measured site 100a is an x direction, the vertical direction is a y direction, the inclination in the y direction with the x direction of the luster material 110 as the central axis is θx, the inclination in the x direction with the y direction as the central axis is θy, and the bright point 11 of the illumination display device 1 is moved in the x direction. θx = θy = 0 in the normal direction of the measured site 100a.

The orientation information of the luster material 110 obtained by the measurement method of the present example corresponds to θx = θx' and θy = θy'. Here, θx' is an angle uniquely determined from a shift amount of a moving direction line of the analysis area 32 where the specular reflection light by the luster material 110 of the moving bright point 11 is analyzed and the geometry of the imaging element 3. On the other hand, θy' corresponds to the peak position obtained by the above measurement.

In many cases, an automobile exterior or the like has a surface structure as illustrated in Fig. 2 and the illumination light incident on the measured site 100a of the measurement object 100 is refracted on the surface of the clear layer 103, and thus it is possible to calculate accurate orientation information of the luster material 110 from the above information by taking the effect into account.

Further, since the peak of the luminance value obtained in the analysis area 32 does not include the specular reflection component on the surface of the clear layer 103 and is derived purely from the reflection of the luster material 110, the luminance information of the luster material 110 can be calculated from the acquired peak value.

Note that, in the analysis area 32, the specular reflection component by the clear layer 200 is not included even in the pixels other than the pixel of interest, and thus statistical information such as luminance distribution and orientation distribution can also be acquired by performing similar analysis on all the analysis areas.

Further, since the position vertically shifted from the moving direction line of the light receiving portion 30 for the specular reflection component by the clear layer 200 is analyzed, it is possible to acquire the orientation distribution regarding θy includingθy = 0 with respect to the luster material 110 of a certain θx = θx'.

As described above, the measured site 100a of the measurement object 100 is illuminated with the illumination light of which the illumination angle is changed to a plurality of illumination angles by moving and scanning the bright point 11 in one direction, a specific area that does not receive any specular reflection component on the surface of the clear layer 103 of each illumination light in which the illumination angle is changed in the light receiving area in the imaging element 3 is set as the analysis area 32, and the optical characteristics of the luster material 110 are analyzed on the basis of a light reception result of only the specular reflection light by the luster material 110 in the analysis area 32. Thus, the optical characteristics such as luminance and light distribution characteristic of the luster material 110 can be accurately measured while eliminating the influence of the specular reflection component on the surface of the clear layer 103.

Note that the optical characteristics that can be obtained are not only luminance and orientation information. By analyzing two-dimensional spatial luminance distribution, it is also possible to quantify the magnitude of a particle diameter of a contained luster material 202 and the dispersion and aggregation of the luster material.

For example, Fig. 9A illustrates a case where a large number of luster materials 110 having a small particle diameter are present, and Fig. 9B illustrates a case where a large number of luster materials 110 having a large particle diameter are present. The particle diameter of a luster material 110 can be calculated from the fact that the light distribution angle and the length in the horizontal direction of the luster material 110 are recognized by analyzing a two-dimensional spatial luminance distribution.

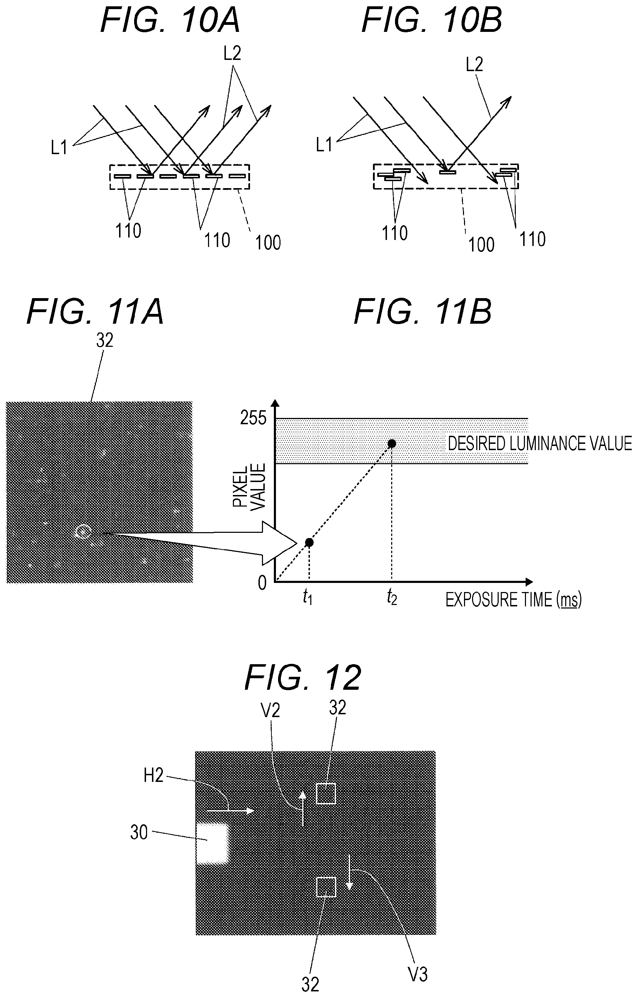

Further, similarly, by analyzing the two-dimensional spatial luminance distribution, the presence or absence of unevenness (whether particles are uniformly dispersed or there is an aggregated location) of the luster material for each location can also be quantified. Fig. 10A illustrates a state in which the luster materials are dispersed, and Fig. 10B illustrates a state in which the luster materials 110 are aggregated.

By analyzing and evaluating the optical characteristics in this manner, it is possible to measure a lot of information on paint physical properties represented by at least one of luminance/chromaticity, orientation, particle size, dispersion aggregation, and the like of the luster material 110.

Further, since the single illumination display device 1 is used, it is possible to suppress complication of the entire configuration of the optical characteristics measuring device as compared with the case of using a plurality of light sources.

In addition, the moving direction of the bright point 11 may be set to the vertical direction in Fig. 4A, that is, a direction perpendicular to a plane constituted by the normal of the measured site 100a, the normal of the illumination display device 1, and the normal of the imaging element 3.

### (Second Example)

In this example, how to determine the exposure time in the analysis area 32 will be described.

Since the optical characteristics differ depending on the measurement object 100, the appropriate exposure time differs for each measurement object 100. From the viewpoint of shortening the entire measurement time, it is desirable to first perform preliminary measurement for determining the exposure time, and then perform a series of main measurement with an optimum exposure time calculated using acquired information.

It is desirable that the exposure time is long from the viewpoint of the signal-to-noise ratio (S/N), but it is necessary not to exceed the measurement maximum luminance value from the viewpoint of luminance value calculation and luminance change analysis. Accordingly, it is desirable to select an exposure time during which the luminance value of the bright spot of the luster material 110 when the illumination light is specularly reflected falls within a desired luminance range.

A process of determining such an exposure time will be described.

The analysis area 32 actually used in the present measurement is used, and the illumination pattern (for example, bright point) actually used in the present measurement is used. It is desirable that the illumination pattern illuminates a location close to the analysis area 32, but is not limited thereto.

As illustrated in Fig. 11B, an image is captured in a preset short time t1 using the illumination pattern. Among the captured luminance images in the analysis area 32, luminance values of characteristically bright ones are used as illustrated in Fig. 11A. The characteristically bright one may use the one having the highest luminance value in the analysis area 32, but is not limited thereto.

In general, since there is a linear relationship between the exposure time and the acquired luminance value, when the luminance value at a certain exposure time is measured, it is possible to calculate the exposure time that falls within a desired luminance range. Accordingly, as illustrated in Fig. 11B, t2, which is an exposure time suitable for the illumination image, is calculated using the linearity.

In the main measurement after the preliminary measurement, the exposure time t2 is used as a reference, and the measurement is performed at an exposure time suitable for each illumination.

Such determination of the exposure time t2 is desirably performed for each movement of the illumination pattern, in other words, for each illumination angle of the illumination light, but is not limited thereto.

In the second embodiment, since the exposure time for the imaging element 3 is determined for each illumination angle of the illumination light before starting the main measurement as described above, it is possible to measure the optical characteristics with higher accuracy with an appropriate exposure time.

### (Third Example)

As illustrated in Fig. 12, the analysis areas 32 and 32 in the imaging element 3 are set at positions shifted in perpendicular directions V2 and V3 with respect to a moving direction H on both sides of the moving direction H of the light receiving portion 30 for the specular reflection component on the surface of the clear layer 103. Conversely, the light receiving portion 30 passes through the midpoint between the analysis areas 32 and 32. The positions of both the analysis areas 32 and 32 may not be the same in each captured image when the bright point 11 is moved.

In many cases, the distribution of the luster material 110 depends only on the angle between the normal of the luster material 110 and the normal direction of the measured site 100a. Thus, an orientation distribution related to θy including θy = 0 with respect to the luster material 110 of θx = θx' coincides with an orientation distribution related to θy includingθy = 0 with respect to the luster material 110 of θx = -θx'.

By using such properties and setting the analysis areas 32 and 32 on both sides in the moving direction H2 of the light receiving portion 30 with respect to the bright point 11, the analysis range can be increased in a state where the light receiving angle width is suppressed, and observation of more luster materials can be performed at a time.

Note that, if the analysis area 32 is made large, the illumination/light receiving angle width becomes large and thus the analysis area 32 is preferably small, but on the other hand, the statistical information of the luster material 110 cannot be acquired unless the analysis area 32 is sufficiently secured, and thus the analysis area 32 is preferably large from this viewpoint. By setting the two analysis areas 32 and 32 as in the third embodiment, the trade-off relationship can be simultaneously solved.

### (Fourth Example)

In the first to third examples, the case where the illumination pattern is the bright point 11 and the bright point 11 is moved has been described, but in a fourth example, a case where the illumination pattern is two bright lines and the bright lines are moved will be described.

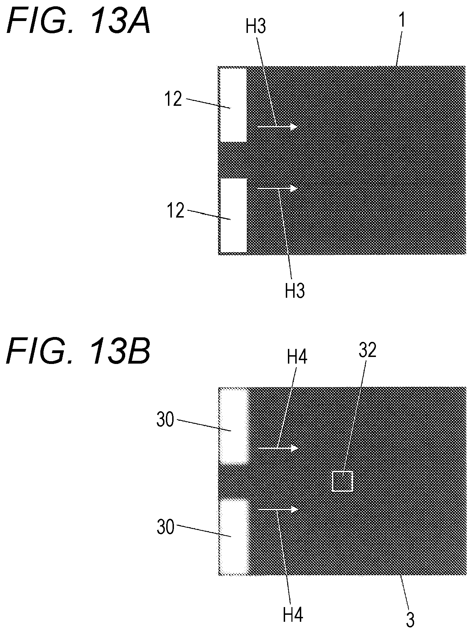

As illustrated in Fig. 13A, vertically long bright lines 12 and 12 are displayed at both end portions of the rectangular display surface of the illumination display device 1 except for the intermediate portion in the vertical direction, and the bright lines 12 and 12 are moved and scanned in the horizontal direction as indicated by an arrow H3, thereby changing the illumination angle of the illumination light with respect to the measured site 100a.

On the other hand, as illustrated in Fig. 13B, in the image obtained by the imaging element 3, both end portions of the entire rectangular light receiving area except for the intermediate portion in the vertical direction become the light receiving portions 30 that receive the specular reflection component on the surface of the clear layer 103 of the illumination light of the bright lines 12 and 12. Then, in accordance with movement (scanning) of the bright lines 12 and 12 in the horizontal direction, the two light receiving portions 30 and 30 move in the horizontal direction (corresponding to second and third directions) H4 and H4.

In this embodiment, the analysis area 32 is set at a substantially center portion in the horizontal direction at the intermediate position between the two moving directions H4 and H4 of the two light receiving portions 30 and 30 in the light receiving area of the imaging element 3. In the analysis area 32, since the specular reflection component on the surface of the clear layer 103 is not received and only the specular reflection light derived from the luster material is received, the optical characteristics such as luminance and the orientation characteristics of the luster material 110 can be measured as in the case of the bright point 11.

Further, since the analysis area is set in the region where the two light receiving portions 30 corresponding to the two bright lines 12 and 12 do not pass, with respect to θx'max determined by the configuration of the illumination display device 1, it is possible to obtain the orientation distribution regarding θy including θy = 0 related to the luster material 110 with the luster material 110 having a wide range of orientation angles falling within |θx| < θx'max as a target. Note that θx'max = 21.8° in the configuration illustrated in Fig. 5, and as described above, most of the luster materials 110 are usually inside such an illumination angle width.

Note that, in the fourth example, two bright points may be used instead of the two bright lines 12 and 12.

### (Fifth Example)

In this example, the two bright lines 12 and 12 used in the fourth embodiment are moved in the horizontal direction (x direction) and the vertical direction (y direction) of the display surface of the illumination display device 1, respectively.

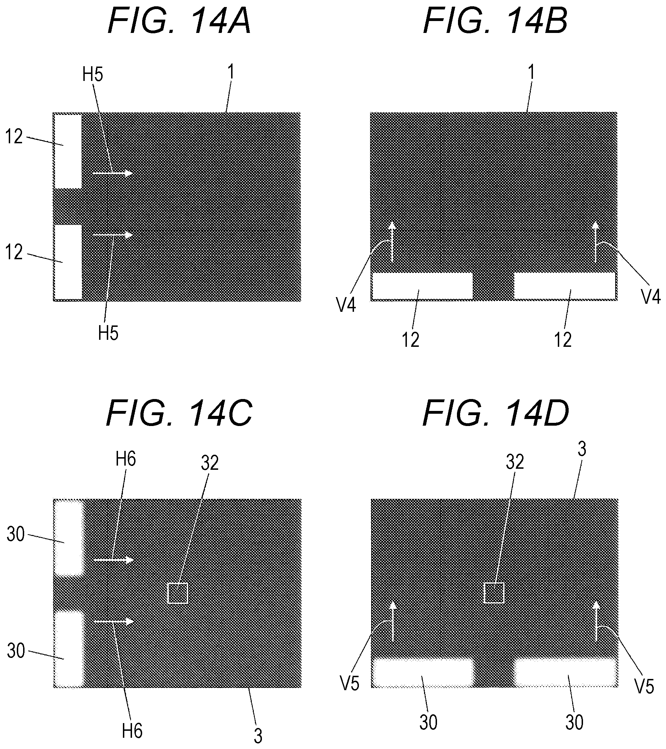

As illustrated in Fig. 14A, vertically long bright lines 12 and 12 are displayed at both end portions of the left end portion of the rectangular display surface of the illumination display device 1 except for the intermediate portion in the vertical direction, and the bright lines 12 and 12 are moved in the horizontal direction as indicated by arrows H5 and H5, thereby changing the illumination angle of the illumination light with respect to the measured site 100a.

Further, as illustrated in Fig. 14B, horizontally long bright lines 12 and 12 are displayed at both end portions of a lower end portion of the rectangular display surface of the illumination display device 1 except for an intermediate portion in the horizontal direction, and the illumination angle of the illumination light with respect to the measured site 100a is changed by moving these bright lines 12 and 12 in the vertical direction as indicated by arrows V4 and V4.

An image of the imaging element 3 corresponding to the bright lines 12 and 12 illustrated in Fig. 14A is illustrated in Fig. 14C. In this image, the both end portions in the entire rectangular light receiving area excluding the intermediate portion in the vertical direction become light receiving portions 30 and 30 that receive the specular reflection component on the surface of the clear layer 103 of the illumination light by the bright lines 12 and 12. Then, according to the movement of the bright lines 12 and 12 in the horizontal direction, the two light receiving portions 30 and 30 move in the horizontal direction as indicated by arrows H6 and H6.

An image of the imaging element 3 corresponding to the bright lines 12 and 12 illustrated in Fig. 14B is illustrated in Fig. 14D. In this image, both end portions in the entire rectangular light receiving area excluding the intermediate portion in the horizontal direction become light receiving portions 30 and 30 that receive the specular reflection component on the surface of the clear layer 103 of the illumination light by the bright lines 12 and 12. Then, according to the movement of the bright lines 12 and 12 in the vertical direction, the two light receiving portions 30 and 30 move in the vertical direction as indicated by arrows V5 and V6.

In this example, in the light receiving area of the imaging element 3, the analysis area 32 is set at the center portion where none of the light receiving portions 30 for the specular reflection component on the surface of the clear layer passes when the bright lines 12 and 12 are moved in the two longitudinal and lateral directions. In the analysis area 32, the specular reflection component on the surface of the clear layer 103 is not received and only the specular reflection light derived from the luster material is received, and thus optical characteristics such as luminance and orientation characteristics of the luster material 110 can be measured.

In addition, by moving the two bright lines 12 and 12 in two orthogonal directions, it is possible to obtain an orientation angle in the two orthogonal directions in each of the luster materials 110. Therefore, it is possible to estimate an orientation angle (or a plane normal vector) in an arbitrary two-dimensional direction from both values.

Note that, in the fourth example, instead of the two bright lines 12 and 12, two bright points may be moved in the vertical direction and the horizontal direction.

### (Modification)

The present invention is not limited to the examples described above and may be modified within the scope defined by the appended claims.

For example, the sample 100 on which a paint including the luster material 110 is applied on a surface has been exemplified, but even when the luster material 110 is not included, when treatment such as alumite treatment is applied, minute irregularities and gradients exist in a micro region on the order of several µm to several tens µm on the surface. Due to the minute structure, a part of the surface looks sparkly when illuminated and observed from a specific direction, or another part shines when illuminated and observed from another direction, or the like, which is a driving force for expression of high design quality. Therefore, even if the luster material 110 is not present, it is possible to similarly measure the optical characteristics of the sample 100 having minute irregularities and gradients on the surface, such as a sample subjected to alumite treatment.

This application claims the priority of Japanese Patent Application No. 2020-160338 filed on September 25, 2020.

### Industrial Applicability

The present invention can be used as an optical characteristics measuring device that measures optical characteristics of a painted part or the like as a measured site including, for example, a flaky aluminum piece or mica piece called a luster material.

### Reference Signs List

- 1: Illumination display device
- 2: Objective lens
- 3: Imaging element
- 4: Calculation unit
- 5: Measurement result display unit
- 8: Housing
- 81: Opening
- 11: Bright point
- 12: Bright line
- 30: Light receiving portion for specular reflection component
- 32: Analysis area
- 100: Measurement object (sample)
- 100a: Measured site
- 110: Luster material
- 111: Luster material of interest

## Claims

1. An optical characteristics measuring device, comprising:
an illumination device (1) capable of illuminating a measured site (100a) of a measurement object (100) with illumination light of which an illumination angle is changed to a plurality of illumination angles;
an imaging element (3) configured to receive reflected light from the measured site (100a) of each beam of the illumination light having the illumination angle changed and converts the reflected light into an image; and
an analysis unit (4) configured to set, as an analysis area (32), a specific area at a position in the image where a specular reflection component reflected by a surface of the measured site (100a) is not received with respect to any beam of the illumination light having the illumination angle changed in a light receiving area in the imaging element (3), and analyze an optical characteristic of the measured site (100a) on the basis of a light reception result in the analysis area (32) when the measured site (100a) is irradiated with each beam of the illumination light, wherein
the illumination device (1) is a single illumination display device configured to change the illumination angle into the plurality of illumination angles by moving a display position of a specific illumination pattern, and
a moving direction of the illumination pattern is a direction parallel and/or perpendicular to a plane formed by a normal of the measured site (100a), a normal of the illumination display device, and a normal of the imaging element (3); wherein
the imaging element (3) is a two-dimensional imaging element in which an entire light receiving area is larger than a light receiving portion (30) of the specular reflection component reflected by the surface of the measured site (100a) by one beam of illumination light; and wherein
the analysis unit (4) is configured to set the analysis area (32) at a position shifted in a direction perpendicular to a first direction, the first direction being the direction in which the position of the light receiving portion (30) of the imaging element (3) for the specular reflection component reflected by the surface of the measured site (100a) sequentially moves in response to the change in the illumination angle of the illumination light.

2. The optical characteristics measuring device according to claim 1, wherein the specific illumination pattern is a single or a plurality of bright points (11) or bright lines (12).

3. The optical characteristics measuring device according to claim 1, wherein there are two analysis areas (32), and the position of the light receiving portion (30) for the specular reflection component moving in the first direction passes through a midpoint of the two analysis areas.

4. The optical characteristics measuring device according to any one of claims 1 to 3, further comprising an exposure time determining unit configured to determine an exposure time of the illumination light with respect to the imaging element (3) before starting measurement.

5. The optical characteristics measuring device according to claim 4, wherein the exposure time determining unit is configured to determine the exposure time on the basis of luminance information obtained in the analysis area (32), or on the basis of luminance information obtained in the analysis area (32) and an exposure time at that time.

6. The optical characteristics measuring device according to claim 1 to 5, wherein spatial resolution of the imaging element (3) is 10 to 100 µm.

7. The optical characteristics measuring device according to any one of claims 1 to 6, wherein the optical characteristic of the measured site (100a) is an optical characteristic derived from a luster material (110) contained in the measurement object (100), or wherein an optical characteristic derived from a luster material (110) include at least one of information on a light distribution characteristic, luminance, a particle diameter, or dispersion aggregation of the luster material (110).

8. The optical characteristics measuring device according to claim 7, wherein the light distribution characteristic is measured in each of two orthogonal directions.

9. The optical characteristics measuring device according to any one of claims 1 to 8, wherein
the illumination device (1), the imaging element (3), and the analysis unit (4) are provided in one housing (8), and
the housing (8) includes an opening (81) for irradiating a measured site (100a) of the measurement object (100) with illumination light and taking in reflected light from the measured site (100a), and a result display unit for displaying a measurement result.

10. An optical characteristics measuring method, comprising:
a step of illuminating, by an illumination device (1), a measured site (100a) of a measurement object (100) with illumination light of which an illumination angle is changed to a plurality of illumination angles;
a step of receiving, by an imaging element (3), reflected light from the measured site (100a) of each beam of the illumination light having the illumination angle changed; and
a step of setting, as an analysis area (32), a specific area at a position where a specular reflection component reflected by a surface of the measured site (100a) is not received with respect to any beam of the illumination light having the illumination angle changed in a light receiving area in the imaging element (3), and analyzing an optical characteristic of the measured site (100a) on the basis of a light reception result in the analysis area (32) when the measured site (100a) is irradiated with each beam of the illumination light, wherein
the step of illuminating includes moving a display position of a specific illumination pattern, by the illumination device (1) being a single illumination display device configured to change the illumination angle into the plurality of illumination angles, and
a moving direction of the illumination pattern is a direction parallel and/or perpendicular to a plane formed by a normal of the measured site (100a), a normal of the illumination display device, and a normal of the imaging element (3); wherein
the imaging element (3) is a two-dimensional imaging element in which an entire light receiving area is larger than a light receiving portion (30) of the specular reflection component reflected by the surface of the measured site (100a) by one beam of illumination light; and wherein the analysis unit (4) is configured to set the analysis area (32) at a position shifted in a direction perpendicular to a first direction, the first direction being the direction in which the position of the light receiving portion (30) of the imaging element (3) for the specular reflection component reflected by the surface of the measured site (100a) sequentially moves in response to the change in the illumination angle of the illumination light.

## Patentansprüche

1. Messvorrichtung für optische Eigenschaften, umfassend:
eine Beleuchtungsvorrichtung (1), die in der Lage ist, eine Messstelle (100a) eines Messobjekts (100) mit Beleuchtungslicht zu beleuchten, dessen Beleuchtungswinkel in eine Vielzahl von Beleuchtungswinkeln geändert wird;
ein Bilderzeugungselement (3), das so konfiguriert ist, dass es von der Messstelle reflektiertes Licht (100a) von jedem Strahl des Beleuchtungslichts mit geändertem Beleuchtungswinkel empfängt und das reflektierte Licht in ein Bild umwandelt; und
eine Analyseeinheit (4), die so konfiguriert ist, dass sie als Analysebereich (32) einen spezifischen Bereich an einer Position in dem Bild festlegt, an der eine von einer Oberfläche der Messstelle (100a) reflektierte Spiegelreflexionskomponente in Bezug auf jeden Strahl des Beleuchtungslichts mit geändertem Beleuchtungswinkel in einem Lichtempfangsbereich in dem Bilderzeugungselement (3) nicht empfangen wird, und eine optische Eigenschaft der Messstelle (100a) auf der Grundlage eines Lichtempfangsergebnisses im Analysebereich (32) wenn die Messstelle (100a) mit jedem Strahl des Beleuchtungslichts bestrahlt wird analysiert, wobei
die Beleuchtungsvorrichtung (1) eine einzelne Beleuchtungsanzeigevorrichtung ist, die so konfiguriert ist, dass sie den Beleuchtungswinkel in die Vielzahl von Beleuchtungswinkeln ändert, indem sie eine Anzeigeposition eines spezifischen Beleuchtungsmusters bewegt, und
eine Bewegungsrichtung des Beleuchtungsmusters eine Richtung parallel und/oder senkrecht zu einer Ebene ist, die durch eine Normale der Messstelle (100a), eine Normale der Beleuchtungsanzeigevorrichtung und eine Normale des Bilderzeugungselement (3) gebildet wird; wobei
das Bilderzeugungselement (3) ein zweidimensionales Bilderzeugungselement ist, in dem ein gesamter Lichtempfangsbereich größer ist als ein Lichtempfangsabschnitt (30) der Spiegelreflexionskomponente, die von der Oberfläche der Messstelle (100a) von einem Beleuchtungslichtstrahl reflektiert wird; und wobei
die Analyseeinheit (4) so konfiguriert ist, dass sie den Analysebereich (32) an einer in einer zu einer ersten Richtung senkrechten Richtung verschobenen Position festlegt, wobei die erste Richtung die Richtung ist, in der sich die Position des Lichtempfangsabschnitts (30) des Bilderzeugungselements (3) für die Spiegelreflexionskomponente, die von der Oberfläche der Messstelle (100a) reflektiert wird, als Reaktion auf die Änderung des Beleuchtungswinkels des Beleuchtungslichts sequentiell bewegt.

2. Messvorrichtung für optische Eigenschaften gemäß Anspruch 1, wobei das spezifische Beleuchtungsmuster ein einzelner/eine einzelne oder eine Vielzahl von hellen Punkten (11) oder hellen Linien (12) ist.

3. Messvorrichtung für optische Eigenschaften gemäß Anspruch 1, wobei es zwei Analysebereiche (32) gibt und die Position des Lichtempfangsabschnitts (30) für die Spiegelreflexionskomponente, die sich in die erste Richtung bewegt, durch einen Mittelpunkt der beiden Analysebereiche verläuft.

4. Messvorrichtung für optische Eigenschaften gemäß einem der Ansprüche 1 bis 3, die ferner eine Belichtungszeit-Bestimmungseinheit umfasst, die so konfiguriert ist, dass sie eine Belichtungszeit des Beleuchtungslichts in Bezug auf das Bilderzeugungselement (3) vor Beginn der Messung bestimmt.

5. Messvorrichtung für optische Eigenschaften gemäß Anspruch 4, wobei die Belichtungszeit-Bestimmungseinheit so konfiguriert ist, dass sie die Belichtungszeit auf der Grundlage von Helligkeitsinformationen, die in dem Analysebereich (32) erhalten werden, oder auf der Grundlage von Helligkeitsinformationen, die in dem Analysebereich (32) erhalten werden, und einer Belichtungszeit zu diesem Zeitpunkt bestimmt.

6. Messvorrichtung für optische Eigenschaften gemäß Anspruch 1 bis 5, wobei die räumliche Auflösung des Bilderzeugungselement (3) 10 bis 100 µm beträgt.

7. Messvorrichtung für optische Eigenschaften gemäß einem der Ansprüche 1 bis 6, wobei die optische Eigenschaft der Messstelle (100a) eine optische Eigenschaft ist, die von einem im Messobjekt (100) enthaltenen Glanzmaterial (110) abgeleitet ist, oder wobei eine von einem Glanzmaterial (110) abgeleitete optische Eigenschaft mindestens eine von Informationen über eine Lichtverteilungseigenschaft, Helligkeit, einen Teilchendurchmesser oder Dispersionsaggregation des Glanzmaterials (110) umfasst.

8. Messvorrichtung für optische Eigenschaften gemäß Anspruch 7, wobei die Lichtverteilungseigenschaft in jeder von zwei zueinander senkrechten Richtungen gemessen wird.

9. Messvorrichtung für optische Eigenschaften gemäß einem der Ansprüche 1 bis 8, wobei
die Beleuchtungsvorrichtung (1), das Bilderzeugungselement (3) und die Analyseeinheit (4) in einem Gehäuse (8) vorgesehen sind, und
das Gehäuse (8) eine Öffnung (81) zum Bestrahlen einer Messstelle (100a) des Messobjekts (100) mit Beleuchtungslicht und zum Aufnehmen von der Messstelle (100a) reflektiertem Licht sowie eine Ergebnisanzeigeeinheit zum Anzeigen eines Messergebnisses umfasst.

10. Verfahren zum Messen optischer Eigenschaften, umfassend:
einen Schritt des Beleuchtens, durch eine Beleuchtungsvorrichtung (1), einer Messstelle (100a) eines Messobjekts (100) mit Beleuchtungslicht, dessen Beleuchtungswinkel in eine Vielzahl von Beleuchtungswinkeln geändert wird;
einen Schritt des Empfangens, durch ein Bilderzeugungselement (3), von reflektiertem Licht von der Messstelle (100a) von jedem Strahl des Beleuchtungslichts mit geändertem Beleuchtungswinkel; und
einen Schritt des Einstellens eines spezifischen Bereichs an einer Position, an der eine von einer Oberfläche der Messstelle (100a) reflektierte Spiegelreflexionskomponente in Bezug auf jeden Strahl des Beleuchtungslichts mit geändertem Beleuchtungswinkel in einem Lichtempfangsbereich in dem Bilderzeugungselement (3) nicht empfangen wird, als Analysebereich (32), und Analysieren einer optischen Eigenschaft der Messstelle (100a) auf der Grundlage eines Lichtempfangsergebnisses im Analysebereich (32), wenn die Messstelle (100a) mit jedem Strahl des Beleuchtungslichts bestrahlt wird, wobei
der Schritt des Beleuchtens das Bewegen einer Anzeigeposition eines spezifischen Beleuchtungsmusters durch die Beleuchtungsvorrichtung (1) umfasst, die eine einzelne Beleuchtungsanzeigevorrichtung ist, die so konfiguriert ist, dass sie den Beleuchtungswinkel in die Vielzahl von Beleuchtungswinkeln ändert, und
eine Bewegungsrichtung des Beleuchtungsmusters eine Richtung parallel und/oder senkrecht zu einer Ebene ist, die durch eine Normale der Messstelle (100a), eine Normale der Beleuchtungsanzeigevorrichtung und eine Normale des Bilderzeugungselement (3) gebildet wird; wobei
das Bilderzeugungselement (3) ein zweidimensionales Bilderzeugungselement ist, in dem ein gesamter Lichtempfangsbereich größer ist als ein Lichtempfangsabschnitt (30) der Spiegelreflexionskomponente, die von der Oberfläche der Messstelle (100a) von einem Beleuchtungslichtstrahl reflektiert wird; und wobei
die Analyseeinheit (4) so konfiguriert ist, dass sie den Analysebereich (32) an einer in einer zu einer ersten Richtung senkrechten Richtung verschobenen Position festlegt, wobei die erste Richtung die Richtung ist, in der sich die Position des Lichtempfangsabschnitts (30) des Bilderzeugungselements (3) für die Spiegelreflexionskomponente, die von der Oberfläche der Messstelle (100a) reflektiert wird, als Reaktion auf die Änderung des Beleuchtungswinkels des Beleuchtungslichts sequentiell bewegt.

## Revendications

1. Dispositif de mesure de caractéristiques optiques, comprenant :
un dispositif d'éclairage (1) capable d'éclairer un endroit mesuré (100a) d'un objet de mesure (100) avec une lumière d'éclairage dont un angle d'éclairage est modifié en une pluralité d'angles d'éclairage ;
un élément d'imagerie (3) configuré pour recevoir la lumière réfléchie par l'endroit mesuré (100a) de chaque faisceau de la lumière d'éclairage ayant l'angle d'éclairage modifié et pour convertir la lumière réfléchie en une image ; et
une unité d'analyse (4) configurée pour définir, en tant que zone d'analyse (32), une zone spécifique à une position dans l'image où une composante de réflexion spéculaire réfléchie par une surface de l'endroit mesuré (100a) n'est pas reçue par rapport à n'importe quel faisceau de la lumière d'éclairage ayant l'angle d'éclairage modifié dans une zone de réception de lumière dans l'élément d'imagerie (3), et pour analyser une caractéristique optique de l'endroit mesuré (100a) sur la base d'un résultat de réception de lumière dans la zone d'analyse (32) lorsque l'endroit mesuré (100a) est irradié avec chaque faisceau de la lumière d'éclairage, dans lequel
le dispositif d'éclairage (1) est un dispositif d'affichage d'éclairage unique configuré pour modifier l'angle d'éclairage en la pluralité d'angles d'éclairage en déplaçant une position d'affichage d'un motif d'éclairage spécifique, et
une direction de déplacement du motif d'éclairage est une direction parallèle et/ou perpendiculaire à un plan formé par une normale de l'endroit mesuré (100a), une normale du dispositif d'affichage d'éclairage et une normale de l'élément d'imagerie (3) ; dans lequel
l'élément d'imagerie (3) est un élément d'imagerie bidimensionnel dans lequel une zone de réception de lumière entière est plus grande qu'une partie de réception de lumière (30) de la composante de réflexion spéculaire réfléchie par la surface de l'endroit mesuré (100a) par un faisceau de lumière d'éclairage ; et dans lequel
l'unité d'analyse (4) est configurée pour définir la zone d'analyse (32) à une position décalée dans une direction perpendiculaire à une première direction, la première direction étant la direction dans laquelle la position de la partie de réception de lumière (30) de l'élément d'imagerie (3) pour la composante de réflexion spéculaire réfléchie par la surface de l'endroit mesuré (100a) se déplace séquentiellement en réponse à la modification de l'angle d'éclairage de la lumière d'éclairage.

2. Dispositif de mesure de caractéristiques optiques selon la revendication 1, dans lequel le motif d'éclairage spécifique est un seul/une seule ou une pluralité de points lumineux (11) ou lignes lumineuses (12).

3. Dispositif de mesure de caractéristiques optiques selon la revendication 1, dans lequel il y a deux zones d'analyse (32), et la position de la partie de réception de lumière (30) pour la composante de réflexion spéculaire se déplaçant dans la première direction passe par un point médian des deux zones d'analyse.

4. Dispositif de mesure de caractéristiques optiques selon l'une des revendications 1 à 3, comprenant en outre une unité de détermination de temps d'exposition configurée pour déterminer un temps d'exposition de la lumière d'éclairage par rapport à l'élément d'imagerie (3) avant de commencer la mesure.

5. Dispositif de mesure de caractéristiques optiques selon la revendication 4, dans lequel l'unité de détermination de temps d'exposition est configurée pour déterminer le temps d'exposition sur la base d'informations de luminance obtenues dans la zone d'analyse (32), ou sur la base d'informations de luminance obtenues dans la zone d'analyse (32) et d'un temps d'exposition à ce moment-là.

6. Dispositif de mesure de caractéristiques optiques selon les revendications 1 à 5, dans lequel la résolution spatiale de l'élément d'imagerie (3) est de 10 à 100 µm.

7. Dispositif de mesure de caractéristiques optiques selon l'une des revendications 1 à 6, dans lequel la caractéristique optique de l'endroit mesuré (100a) est une caractéristique optique dérivée d'un matériau brillant (110) contenu dans l'objet de mesure (100), ou dans lequel une caractéristique optique dérivée d'un matériau brillant (110) comprend au moins l'une des informations sur une caractéristique de distribution de lumière, la luminance, un diamètre de particule, ou l'agrégation de dispersion du matériau brillant (110).

8. Dispositif de mesure de caractéristiques optiques selon la revendication 7, dans lequel la caractéristique de distribution de lumière est mesurée dans chacune de deux directions orthogonales.

9. Dispositif de mesure de caractéristiques optiques selon l'une des revendications 1 à 8, dans lequel
le dispositif d'éclairage (1), l'élément d'imagerie (3) et l'unité d'analyse (4) sont disposés dans un boîtier (8), et
le boîtier (8) comprend une ouverture (81) pour irradier un endroit mesuré (100a) de l'objet de mesure (100) avec une lumière d'éclairage et pour capter la lumière réfléchie par l'endroit mesuré (100a), et une unité d'affichage de résultats pour afficher un résultat de mesure.

10. Procédé de mesure de caractéristiques optiques, comprenant :
une étape d'éclairage, par un dispositif d'éclairage (1), d'un endroit mesuré (100a) d'un objet de mesure (100) avec une lumière d'éclairage dont un angle d'éclairage est modifié en une pluralité d'angles d'éclairage ;
une étape de réception, par un élément d'imagerie (3), de la lumière réfléchie par l'endroit mesuré (100a) de chaque faisceau de la lumière d'éclairage ayant l'angle d'éclairage modifié ; et
une étape consistant à définir, en tant que zone d'analyse (32), une zone spécifique à une position où une composante de réflexion spéculaire réfléchie par une surface de l'endroit mesuré (100a) n'est pas reçue par rapport à n'importe quel faisceau de la lumière d'éclairage ayant l'angle d'éclairage modifié dans une zone de réception de lumière dans l'élément d'imagerie (3), et à analyser une caractéristique optique de l'endroit mesuré (100a) sur la base d'un résultat de réception de lumière dans la zone d'analyse (32) lorsque l'endroit mesuré (100a) est irradié avec chaque faisceau de la lumière d'éclairage, dans lequel
l'étape d'éclairage comprend le déplacement d'une position d'affichage d'un motif d'éclairage spécifique, par le dispositif d'éclairage (1) qui est un dispositif d'affichage d'éclairage unique configuré pour modifier l'angle d'éclairage en la pluralité d'angles d'éclairage, et
une direction de déplacement du motif d'éclairage est une direction parallèle et/ou perpendiculaire à un plan formé par une normale de l'endroit mesuré (100a), une normale du dispositif d'affichage d'éclairage et une normale de l'élément d'imagerie (3) ; dans lequel
l'élément d'imagerie (3) est un élément d'imagerie bidimensionnel dans lequel une zone de réception de lumière entière est plus grande qu'une partie de réception de lumière (30) de la composante de réflexion spéculaire réfléchie par la surface de l'endroit mesuré (100a) par un faisceau de lumière d'éclairage ; et dans lequel
l'unité d'analyse (4) est configurée pour définir la zone d'analyse (32) à une position décalée dans une direction perpendiculaire à une première direction, la première direction étant la direction dans laquelle la position de la partie de réception de lumière (30) de l'élément d'imagerie (3) pour la composante de réflexion spéculaire réfléchie par la surface de l'endroit mesuré (100a) se déplace séquentiellement en réponse à la modification de l'angle d'éclairage de la lumière d'éclairage.
